(19)

Europäisches Patentamt
European Patent Office
Office européen des brevets

(11) **EP 4 730 165 A1**

(12) **EUROPEAN PATENT APPLICATION**
published in accordance with Art. 153(4) EPC

(43) Date of publication:
**22.04.2026 Bulletin 2026/17**

(21) Application number: **24832274.5**

(22) Date of filing: **27.05.2024**

(51) International Patent Classification (IPC):
*G06F 18/241* (2023.01)  *G06F 18/243* (2023.01)
*G06F 18/214* (2023.01)  *G06F 18/15* (2023.01)
*G06N 3/045* (2023.01)  *G06N 3/08* (2023.01)
*G06F 11/30* (2006.01)

(52) Cooperative Patent Classification (CPC):
**G06F 11/30; G06F 18/15; G06F 18/214;
G06F 18/241; G06F 18/243; G06N 3/045;
G06N 3/08**

(86) International application number:
**PCT/KR2024/007175**

(87) International publication number:
**WO 2025/005491 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 KR 20230084455
07.07.2023 KR 20230088422**

(71) Applicants:
• **Samsung Electronics Co., Ltd.
Suwon-si, Gyeonggi-do 16677 (KR)**

• **Korea Advanced Institute of Science and
Technology
Daejeon 34141 (KR)**

(72) Inventors:
• **LEE, Youngseop
Suwon-si, Gyeonggi-do 16677 (KR)**
• **BAE, Minyoung
Daejeon 34141 (KR)**
• **LEE, Jaegil
Daejeon 34141 (KR)**

(74) Representative: **Walaski, Jan Filip et al
Venner Shipley LLP
200 Aldersgate
London EC1A 4HD (GB)**

(54) **ELECTRONIC DEVICE FOR OBTAINING DATA HAVING CHANGED SAMPLING PERIOD, AND
CONTROL METHOD THEREFOR**

(57)    An electronic device for obtaining data having a changed sampling period, and a control method therefor are disclosed. The electronic device according to one embodiment of the present document comprises at least one sensor, a memory and at least one processor, wherein the memory can include instructions that, when executed, cause the at least one processor to: generate second data including information about an attribute of data corresponding to a first time point in first data acquired during a first time interval through the at least one sensor in a first sampling period; interpolate the generated second data so as to generate third data on the basis of a second sampling period of which the sampling period differs from that of the first sampling period; and apply a weight to data corresponding to at least one time point to be reconstructed of the generated third data so as to generate fourth data on the basis of the second sampling period.

EP 4 730 165 A1

START

GENERATE SECOND DATA INCLUDING INFORMATION ASSOCIATED WITH ATTRIBUTE OF DATA CORRESPONDING TO FIRST TIME POINT AMONG FIRST DATA ACQUIRED VIA AT LEAST ONE SENSOR AT FIRST SAMPLING PERIOD DURING FIRST TIME INTERVAL ～ 210

GENERATE THIRD DATA BASED ON SECOND SAMPLING PERIOD HAVING DIFFERENT SAMPLING PERIOD FROM FIRST SAMPLING PERIOD BY INTERPOLATING GENERATED SECOND DATA ～ 220

GENERATE FOURTH DATA BASED ON SECOND SAMPLING PERIOD BY APPLYING WEIGHT TO DATA CORRESPONDING TO AT LEAST ONE TARGET RECOVERY TIME POINT AMONG GENERATED THIRD DATA ～ 230

END

# FIG. 2

## Description

[Technical Field]

The disclosure relates to an electronic device for obtaining data corresponding to a changed sampling period and a control method thereof.

[Background Art]

Various services and additional functions provided via electronic devices, for example, portable electronic devices such as smartphones, are gradually increasing. In order to increase the utility value of such electronic devices and to satisfy the demands of various users, communication service providers or electronic device manufacturers are competitively developing electronic devices to provide various functions and to differentiate from other companies. Accordingly, various functions provided via electronic devices are becoming increasingly advanced.

[Detailed Description of the Invention]

[Technical Problem]

Time series classification is being actively applied to problems such as activity recognition, power usage monitoring, defect classification in manufacturing, or the like. Recently, a large amount of time series data is generated/obtained in real time, but there is a limit to continuously storing high-resolution data in the hardware (e.g., memory) of an electronic device. For example, in the healthcare sector, when user medical data is stored in an electronic device, a storage cycle of a sensor may be lowered due to a storage capacity limit of the electronic device. Therefore, there may be a difficulty in accurate time series classification.

According to an embodiment of the disclosure, for example, an electronic device may be provided, which, in a state in which some data obtained at a high sampling period is stored in the electronic device, may perform time series classification by using a small amount of data obtainedand stored according to the high sampling period and most data obtainedand stored according to a low sampling period, thereby improving the performance of a time series classification model.

According to an embodiment of the disclosure, for example, a control method of an electronic device may be provided, by which, in a state in which some data obtainedat a high sampling period is stored in the electronic device, time series classification is performed by using a small amount of data obtainedand stored according to the high sampling period and most data obtainedand stored according to a low sampling period, and the performance of a time series classification model may be improved.

[Technical Solution]

An electronic device according to an embodiment of the disclosure may include at least one sensor, memory, and at least one processor, and the memory may include instructions that, when executed, cause the at least one processor to generate second data including information associated with an attribute of data corresponding to a first time point among first data obtained at a first sampling periodvia the at least one sensor during a first time interval, the first time point being a time point included in the first time interval, to generate third data based on a second sampling period having a different sampling period from the first sampling period by interpolating the generated second data,and to generate fourth data based on the second sampling periodby applying a weight to data corresponding to at least one target reconstruction time point among the generated third data, wherein the weight is determined based on a relationship between an attribute of the data corresponding to the at least one target reconstruction time point and the first data obtained during the first time interval, and the data corresponding to the at least one target reconstruction time point is data not obtained by the at least one sensor.

A method of controlling an electronic device according to an embodiment of the disclosure may include an operation of generating second data including information associated with an attribute of data corresponding to a first time point among first data obtained at a first sampling period via at least one sensor of the electronic device during a first time interval, the first point being a time point included in the first time interval, an operation of generating third data based on a second sampling period having a different sampling period from the first sampling period by interpolating the generated second data, and an operation of generatingfourth data based on the second sampling periodby applying a weight to data corresponding to at least one target reconstruction time point among the generated third data, wherein the weight is determined based on a relationship between an attribute of the data corresponding to the target reconstruction time point and the first data obtained during the first time interval, and the data corresponding to the target reconstruction time point is data not obtained by the at least one sensor.

[Brief Description of Drawings]

FIG. 1 is a block diagram of an electronic device in a network environment according to various embodiments of the disclosure.

FIG. 2 is a diagram illustrating a function or operation of obtaining data (e.g., fourth data) corresponding to a changed sampling period according to an embodiment of the disclosure.

FIG. 3A is a diagram illustrating a function or operation of training a reconstruction module (reconstructor) and/or a classification module using data obtained according to a high sampling period according to an embodiment of the disclosure.

FIG. 3B is a diagram illustrating a function or operation of obtainingdata corresponding to a changed sampling period and classifying the data corresponding to the changed sampling period by using a reconstruction module (reconstructor) and/or a classification module according to an embodiment of the disclosure.

FIG. 4 is a flowchart illustrating a process of performing the function or operation described in FIG. 3A.

FIGS. 5 and 6 are diagrams illustrating a function or operation of an up-sampler included in a reconstruction module according to an embodiment of the disclosure.

FIG. 7A is a diagram illustrating a comparative example in which data at a target reconstructiontime pointrestored according to the conventional art is different from data that is required to be actually measured.

FIG. 7B is a diagram illustrating an embodiment in which data at a target reconstructiontime point restored according to an embodiment of the disclosure is substantially identical to data that is required to be actually measured.

[Mode for Carrying out the Invention]

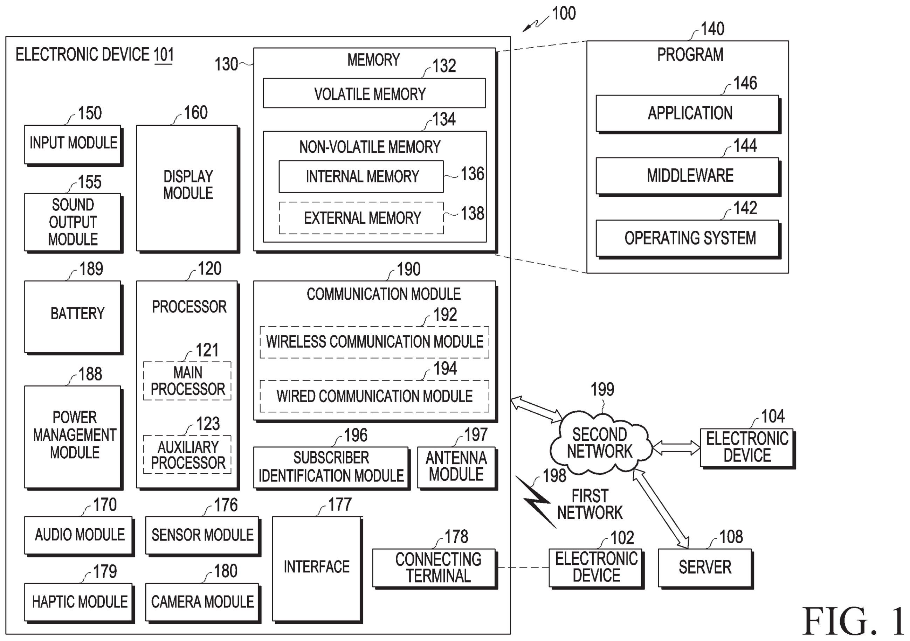

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

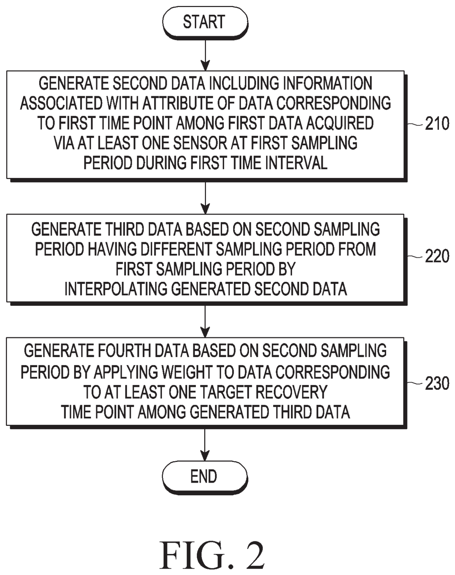

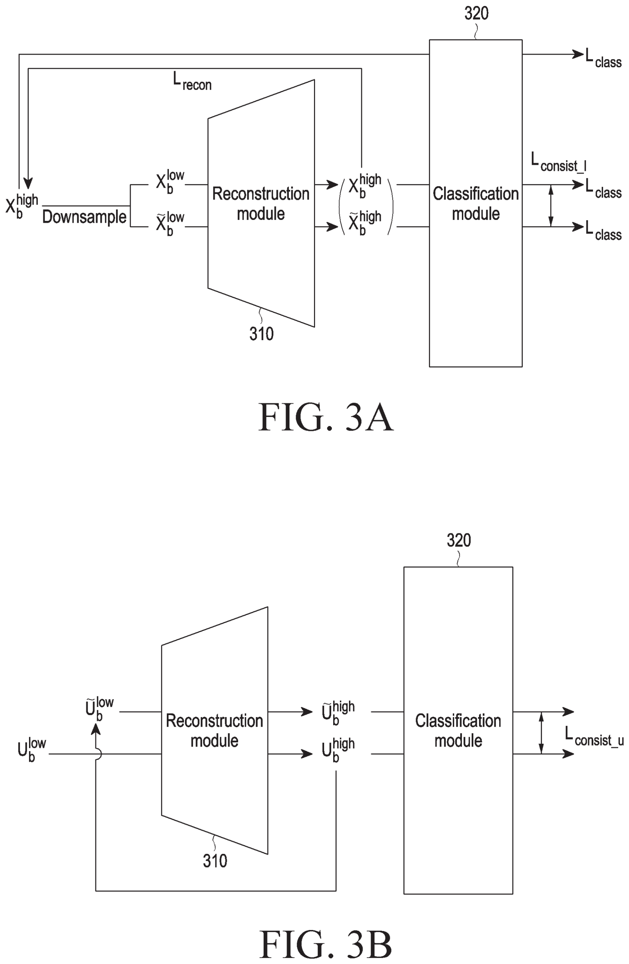

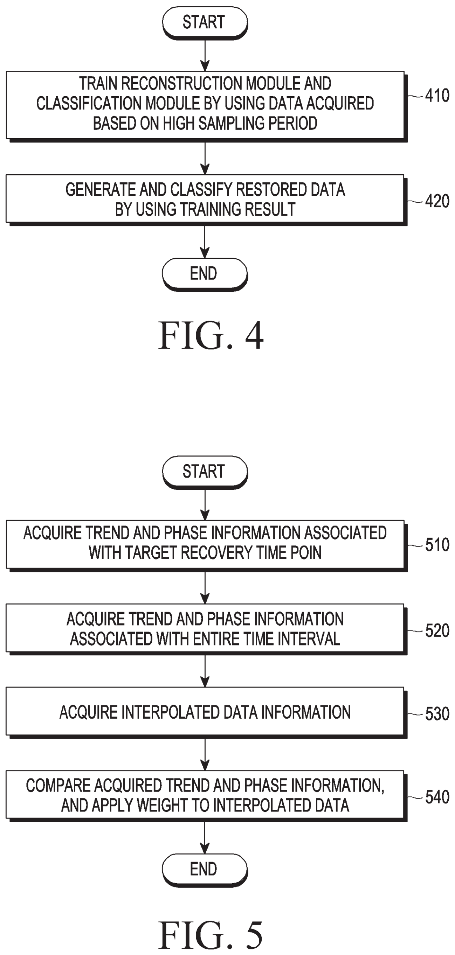

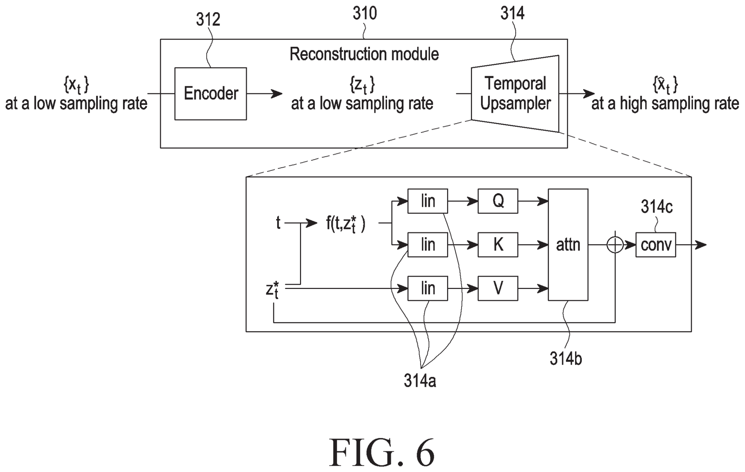

FIG. 2 is a diagram illustrating a function or an operation of obtainingdata (e.g., fourth data) corresponding to a changed sampling period according to an embodiment of the disclosure. FIG. 3B is a diagram illustrating a function or operation of obtainingdata corresponding to a changed sampling period and classifying the data corresponding to the changed sampling period by using a reconstruction module (reconstructor) and/or a classification module according to an embodiment of the disclosure. FIGS. 5 and 6 are diagrams illustrating a function or operation of an up-sampler 314 included in a reconstruction module 310 according to an embodiment of the disclosure.

Referring to FIG. 2 and FIG. 3B, an electronic device 101 (e.g., processor 120) according to an embodiment of the disclosure may, in operation 210, generate second data including information associated with an attribute of data corresponding to a first time point (e.g., heart rate data obtained 40 minutes after first acquisition of heart rate data) among first data (e.g., user's heart rate data) obtained during a first time interval (e.g., 30 minutes) via at least one sensor (e.g., sensor module 176 of FIG. 1) at a first sampling period (e.g., a low sampling period, for example, 1 minute). The first data according to an embodiment of the disclosure may correspond to, for example, at least one of data $x_t$, data $u_b^{low}$, or data $\tilde{u}_b^{low}$ illustrated in FIG. 6. Second data according to an embodiment of the disclosure may correspond to, for example, data $z_t$ illustrated in FIG. 6. The attribute according to an embodiment of the disclosure may include, for example, trend information of the first data (e.g., information on whether a data value increases or decreases) during a time interval (e.g., time interval between 10 minutes before and after 40 minutes) determined based on a first time, phase information of the first data (e.g., whether it corresponds to a sine waveform) during the time interval (e.g., time interval between 10 minutes before and after 40 minutes) determined based on the first time, and/or information on data determined to be unnecessary for up-sampling (e.g., information on noise) among data obtained during the time interval (e.g., time interval between 10 minutes before and after 40 minutes) determined based on the first time. A function or operation of converting the first data into second data according to an embodiment of the disclosure may be performed by an encoder 312 included in the reconstruction module 310 according to an embodiment of the disclosure. The encoder 312 according to an embodiment of the disclosure may generate second data including information related to the attribute of the first data. The encoder 312 according to an embodiment of the disclosure may optionally include at least one attention layer and/or convolution layer. A sampling period of the first data and a sampling period of the second data according to an embodiment of the disclosure may have the substantially same sampling period (e.g., 1 minute).

In operation 220, the electronic device 101 (e.g., processor 120) according to an embodiment of the disclosure may interpolate the second data generated in operation 210, so as to generate third data based on a second sampling period (e.g., 10 seconds) different from a first sampling period (e.g., 1 minute). Operation 220 according to an embodiment of the disclosure may be performed by, for example, the reconstruction module 310 included in the processor 120. The third data according to an embodiment of the disclosure may correspond to, for example, data $z_t^*$ illustrated in FIG. 6. Operation 220 according to an embodiment of the document may be performed by the encoder 312 and/or the up-sampler 314 included in the processor 120.

The electronic device 101 (e.g., processor 120) according to an embodiment of the disclosure may, in operation 230, apply a weight to data (e.g., as data at a target reconstructiontime point, data not obtained by at least one sensor (e.g., sensor module 176)) corresponding to at least one target reconstructiontime point (a time when 40 minutes and 30 seconds have elapsed after acquisition of data) among the third data (e.g., data $z_t^*$) generated according to operation 220, so as to generate fourth data based on the second sampling period. The fourth data according to an embodiment of the disclosure may correspond to, for example, data $\widehat{x}_t$ illustrated in FIG. 6. A function or operation in which the up-sampler 314 applies the weight and generate the fourth data according to an embodiment of the disclosure will be described in detail with reference to FIGS. 5 and 6.

Referring to FIG. 5, the electronic device 101 (e.g., up-sampler 314) according to an embodiment of the disclosure may obtaintrend and phase information associated witha target reconstruction time point (e.g., respectively 40 minutes 10 seconds, 40 minutes 20 seconds, 40 minutes 30 seconds, 40 minutes 40 seconds, and 40 minutes 50 seconds after from first acquisition of data) regarding interpolated data (e.g., second data) in operation 510. The trend and phase information according to an embodiment of the document may be input as an input (e.g., Q) of at least one attention layer 314b included in the up-sampler 314. According to an embodiment of the disclosure, the electronic device 101 (e.g., up-sampler 314) may obtain trend and phase information for the entire * time interval (e.g., 50 minutes) of the interpolated data (e.g., data $z_t^*$) in operation 520. The trend and phase information according to an embodiment of the document may be input as an input (e.g., K) of the at least one attention layer 314b included in the up-sampler 314. The electronic device 101 (e.g., the up-sampler 314) according to an embodiment of the disclosure may obtain information associated with the interpolated data (e.g., data $z_t^*$) in operation 530. The information associated with the interpolated data (e.g., data $z_t^*$) according to an embodiment of the disclosure may be input as an input (e.g., V) of the at least one attention layer 314b included in the up-sampler 314. The electronic device 101 (e.g., the up-sampler 314) according to an embodiment of the disclosure may, in operation 540, compare the trend and phase information obtained in operation 510 and operation 520, and apply a weight to the interpolated data (e.g., data $z_t^*$). For example, when it is determined that the trend and phase information for each target reconstruction time point (e.g., respectively 40 minutes 10 seconds, 40 minutes 20 seconds, 40 minutes 30 seconds, 40 minutes 40 seconds, and 40 minutes 50 seconds after from first acquisition of data) are obtained, and are relevant to the trend and phase information in a specific time interval of the * interpolated data (e.g., data $z_t^*$) (e.g., when the trend and phase information are determined to be similar to each other within an error range), the electronic device 101 according to an embodiment of the disclosure may assign a high weight to data corresponding to the target reconstruction time point (e.g., 40 minutes 10 seconds, 40 minutes 20 seconds, 40 minutes 30 seconds, 40 minutes 40 seconds, and 40 minutes 50 seconds after from first acquisition of data) to generate (e.g., reconstruct) data corresponding to the target reconstruction time point. The up-sampler 314 according to an embodiment of the disclosure may include at least one fully connected layer 314a, at least one attention layer 314b, and/or at least one convolution layer 314c.

The electronic device 101 (e.g., processor 120) according to an embodiment of the disclosure may perform time series classification by using up-sampled data (e.g., the data $\widehat{x}_t$). The time series classification according to an embodiment of the disclosure may be performed by a classification module 320 included in the processor 120. Referring again to FIG. 3B, the electronic device 101 (e.g., processor 120) according to an embodiment of the disclosure may input first data (e.g., data $u_b^{low}$, and/or data $\tilde{u}_b^{low}$) to the reconstruction module 310 as an input for the reconstruction module 310. The first data (e.g., data $\tilde{u}_b^{low}$) according to an embodiment of the disclosure may refer to data obtained by down-sampling a result value that the reconstruction module 310 outputs after up-sampling data $u_b^{low}$. The electronic device 101 (e.g., processor 120) according to an embodiment of the disclosure may input the output data having passed through the reconstruction module 310 to the classification module 320. The electronic device 101 (e.g., processor 120) according to an embodiment of the disclosure may classify the data input to the classification module 320. When two or more types of data are input to the classification module 320 (e.g., when data corresponding to different sampling periods and/or phases are input to the classification module 320), the electronic device 101 (e.g., processor 120) according to an embodiment of the disclosure may control the classification module 320 to classify the data corresponding to different sampling periods and/or phases and input to the classification module 320 as the same class by correcting an error of the data input to the classification module 320 by using a consistency regularization technique. The classification module 320 according to an embodiment of the disclosure may learn a class associated with a predetermined period and/or phase via the above function or operation, and the learning result may be applied to data input to the classification module 320 at a later time.

FIG. 3A is a diagram illustrating a function or operation of training a reconstruction module (reconstructor) and/or a classification module using data obtained according to a high sampling period according to an embodiment of the disclosure. FIG. 4 is a flowchart illustrating a process of performing the function or operation described in FIG. 3A.

Referring to FIG. 3A and FIG. 4, the electronic device 101 (e.g., processor 120) according to an embodiment of the disclosure may train the reconstruction module 310 and/or the classification module 320 using data (e.g., $x_b^{high}$) obtained based on a high sampling period in operation 410. In operation 420, the electronic device 101 (e.g., processor 120) according to an embodiment of the disclosure may generate and/or classify restored data by using the training result obtained in operation 410. The electronic device 101 according to an embodiment of the disclosure may down-sample the data (e.g., $x_b^{high}$) obtained according to the high sampling period to generate one or more down-sampled data (e.g., $x_b^{low}$ , $\tilde{x}_b^{low}$ ). The electronic device 101 according to an embodiment of the disclosure may input one or more down-sampled data (e.g., $x_b^{low}$ , $\tilde{x}_b^{low}$ ) to the reconstruction module 310 to obtain output data (e.g., $x_b^{high}$ , $\tilde{x}_b^{high}$ ). The electronic device 101 according to an embodiment of the disclosure may compare the data (e.g., $x_b^{high}$ ) obtained based on the high sampling period and the output data (e.g., $x_b^{high}$ ) with each other. The electronic device 101 (e.g., reconstruction module 310) according to an embodiment of the disclosure may be trained by using a result (e.g., degree of similarity of data) of comparing the data (e.g., high high $x_b^{high}$ ) obtained based on the high sampling period and the output data (e.g., $x_b^{high}$ ). For example, when the similarity of the data falls within a predetermined error range, it is learned (e.g., determined) that up-sampling is appropriately performed. Alternatively, when the similarity of the data is beyond the predetermined error range, the electronic device 101 according to an embodiment of the disclosure may train the reconstruction module 310 so that the reconstruction module 310 reduces a mean square error between the data (e.g., $x_b^{high}$ ) obtained based on the high sampling period and the output data (e.g., $x_b^{high}$ ). The electronic device 101 (e.g., processor 120) according to an embodiment of the disclosure may classify data input to the classification module 320. When two or more types of data are input to the classification module 320 (e.g., when $x_b^{high}$ and $\tilde{x}_b^{high}$ are input), the electronic device 101 (e.g., processor 120) according to an embodiment of the disclosure may control the classification module 320 to classify data corresponding to different sampling periods and/or phases and input to the classification module 320 as the same class by correcting an error of the data input to the classification module 320 by using a consistency regularization technique. The classification module 320 according to an embodiment of the disclosure may learn a class associated with a predetermined period and/or phase via the above function or operation, and the learning result may be applied to data input to the classification module 320 at a later time.

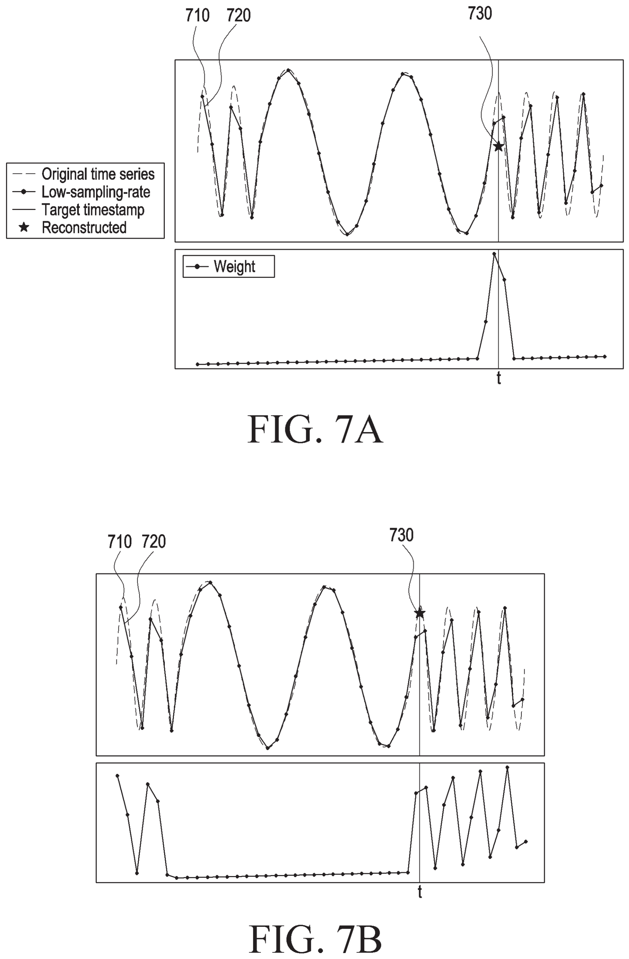

FIG. 7A is a diagram illustrating a comparative example in which data at a target reconstruction time point 730 restored according to the conventional art is different from data 710 that is required to be actually measured. FIG. 7B is a diagram illustrating an embodiment in which data at the target reconstruction time point 730 restored according to an embodiment of the disclosure is substantially identical to data 710 that is required to be actually measured.

Referring to FIG. 7A, a comparative example is illustrated in which, data at the target reconstruction time point 730 restored according to the conventional art is inconsistent with data 710 that is required to be actually measured, and fail to perform accurate classification. Referring to FIG. 7B, an embodiment according to an embodiment of the disclosure is illustrated, in which data at the target reconstruction time point 730 restored based on data 720 obtained at a low sampling period, substantially matches the data 710 that is required to actually measured. Therefore, according to various embodiments of the disclosure, accurate time series classification may be performed by using the restored data.

An electronic device (e.g., electronic device 101 of FIG. 1) according to an embodiment of the disclosure may include at least one sensor (e.g., sensor module 176 of FIG. 1), memory, and at least one processor (e.g., processor 120 of FIG. 1), and the memory may include instructions that, when executed, cause the at least one processor to generate second data including information associated with an attribute of data corresponding to a first time point among first data obtained via the at least one sensor at a first sampling period during a first time interval, wherein the first time point is a point in time included in the first time interval, to generate third data based on a second sampling period having a different sampling period from the first sampling period by interpolating the generated second data, and to generate fourth data based on the second sampling period by applying a weight to data corresponding to at least one target reconstruction time point among the generated third data, wherein the weight is determined based on a correlation between an attribute of the data corresponding to the at least one target reconstruction time point and the first data obtained during the first time interval, and the data corresponding to the at least one target reconstruction time point is data not obtained by the at least one sensor.

A method of controlling an electronic device according to an embodiment of the disclosure may include an operation of generating second data including information associated with an attribute of data corresponding to a first time point among first data obtained via at least one sensor at a first sampling period during a first time interval, wherein the first point is a point in time included in the first time interval, an operation of generating third data based on a second sampling period having a different sampling period from the first sampling by interpolating the generated second data; and an operation of generating fourth data based on the second sampling period by applying a weight to data corresponding to at least one target reconstruction time point among the generated third data, wherein the weight is determined based on a correlation between an attribute of the data corresponding to the target reconstruction time point and the first data obtained during the first time interval, and the data corresponding to the target reconstruction time point is data not obtained by the at least one sensor.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to"another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:

   at least one sensor;
   memory; and
   at least one processor,
   wherein the memory comprises instructions that, when executed by the at least one processor, cause the electronic device to:

   generate second data including information onan attribute of data corresponding to a first time point among first data obtainedata first sampling period via the at least one sensor during a first time interval, the first time pointbeing a time pointincluded in the first time interval;
   generate third data based on a second sampling period having a different sampling period from the first sampling period by interpolating the generated second data; and
   generate fourth data based on the second sampling periodby applying a weight to data corresponding to at least one target reconstructiontime point among the generated third data,
   wherein the weight is determined based on a relationship between an attribute of the data corresponding to the at least one target reconstructiontime point and the first data obtainedduring the first time interval, and
   wherein the data corresponding to the at least one target reconstructiontime point is data not obtainedvia the at least one sensor.

2. The electronic device of claim 1, wherein the attribute includes trend information and/or periodicity information of the data corresponding to the first time point.

3. The electronic device of claim 1 or 2, wherein the memory further comprisesan instruction that, when executed, causes the at least one processor to down-sample data based on a third sampling period having a shorter sampling period than the first sampling periodto perform training.

4. The electronic device of any one of claims 1 to 3, wherein the electronic device further comprises a classification module configured to classify a class of the fourth data, and
   wherein the memory further comprises an instruction that, when executed, causes the at least one processor to train the classification module by correcting an error in results obtained by classifying the down-sampled data by the classification module, .

5. The electronic device of any one of claims 1 to 4, wherein the relationship is determined based on the attribute of the data corresponding to the target reconstructiontime point and a result of outputting, via an attention layer, the first data obtained during the first time interval.

6. The electronic device of any one of claims 1 to 5, wherein the second sampling period has a shorter sampling period than the first sampling period.

7. The electronic device of any one of claims 1 to 6, wherein the target reconstructiontime point is a time point included in the first time interval.

8. The electronic device of any one of claims 1 to 7, wherein the memory further comprises an instruction that, when executed, causes the at least one processor togenerate the fourth data by convolutingthe third data with the result of the attention layer.

9. The electronic device of any one of claims 1 to 8, wherein the memory further comprises an instruction that, when executed, causes the at least one processor to classify a class of the fourth data by the classification module.

10. The electronic device of any one of claims 1 to 9, wherein the electronic device further comprises an encoder configured to generate the second data, and
    wherein the encoder comprises the attention layer and a convolution layer.

11. A method comprising:

    generating second data including information on an attribute of data corresponding to a first time point among first data obtainedat a first sampling periodvia at least one sensor of an electronic device during a first time interval, the first point being a time point included in the first time interval;
    generate third data based on a second sampling period having a different sampling period from the first sampling by interpolating the generated second data; and
    generate fourth data based on the second sampling periodby applying a weight to data corresponding to at least one target reconstruction time point among the generated third data,
    wherein the weight is determined based on a relationship between an attribute of the data corresponding to the target reconstructiontime point and the first data obtained during the first time interval, and
wherein the data corresponding to the target reconstructiontime point is data not obtainedvia the at least one sensor.

12. The method of claim 11, wherein the attribute comprises trend information and/or periodicity information of the data corresponding to the first time point.

13. The method of claim 11 or 12, further comprisingdown-sampling data based on a third sampling period having a shorter sampling period than the first sampling period to perform training.

14. The method of any one of claims 11 to 13, wherein the electronic device further comprises a classification module configured to classify the fourth data by class, and
wherein the method of controlling the electronic device further comprises training the classification module by correcting an error in results obtained by classifying the down-sampled data by the classification module.

15. The method of any one of claims 11 to 14, wherein the relationship is determined based on the attribute of the data corresponding to the target reconstructiontime point and a result of outputting, via an attention layer, the first data obtained during the first time interval.

FIG. 1

START

GENERATE SECOND DATA INCLUDING INFORMATION ASSOCIATED WITH ATTRIBUTE OF DATA CORRESPONDING TO FIRST TIME POINT AMONG FIRST DATA ACQUIRED VIA AT LEAST ONE SENSOR AT FIRST SAMPLING PERIOD DURING FIRST TIME INTERVAL — 210

GENERATE THIRD DATA BASED ON SECOND SAMPLING PERIOD HAVING DIFFERENT SAMPLING PERIOD FROM FIRST SAMPLING PERIOD BY INTERPOLATING GENERATED SECOND DATA — 220

GENERATE FOURTH DATA BASED ON SECOND SAMPLING PERIOD BY APPLYING WEIGHT TO DATA CORRESPONDING TO AT LEAST ONE TARGET RECOVERY TIME POINT AMONG GENERATED THIRD DATA — 230

END

# FIG. 2

FIG. 3A

FIG. 3B

START

TRAIN RECONSTRUCTION MODULE AND
CLASSIFICATION MODULE BY USING DATA ACQUIRED
BASED ON HIGH SAMPLING PERIOD
— 410

GENERATE AND CLASSIFY RESTORED DATA
BY USING TRAINING RESULT
— 420

END

FIG. 4

START

ACQUIRE TREND AND PHASE INFORMATION ASSOCIATED
WITH TARGET RECOVERY TIME POIN
— 510

ACQUIRE TREND AND PHASE INFORMATION
ASSOCIATED WITH ENTIRE TIME INTERVAL
— 520

ACQUIRE INTERPOLATED DATA INFORMATION
— 530

COMPARE ACQUIRED TREND AND PHASE INFORMATION,
AND APPLY WEIGHT TO INTERPOLATED DATA
— 540

END

FIG. 5

FIG. 6

FIG. 7A

FIG. 7B

# INTERNATIONAL SEARCH REPORT

| | International application No. |
|---|---|
| | **PCT/KR2024/007175** |

| | |
|---|---|
| **A.** | **CLASSIFICATION OF SUBJECT MATTER** |

**G06F 18/241**(2023.01)i; **G06F 18/243**(2023.01)i; **G06F 18/214**(2023.01)i; **G06F 18/15**(2023.01)i; **G06N 3/045**(2023.01)i; **G06N 3/08**(2006.01)i; **G06F 11/30**(2006.01)i

According to International Patent Classification (IPC) or to both national classification and IPC

| | |
|---|---|
| **B.** | **FIELDS SEARCHED** |

Minimum documentation searched (classification system followed by classification symbols)

G06F 18/241(2023.01); B25J 13/00(2006.01); B25J 13/08(2006.01); G06N 10/20(2022.01); G06N 3/04(2006.01); G06N 3/08(2006.01); G06V 10/774(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 샘플링 주기(sampling rate), 데이터(data), 보간(interpolation), 재구성(reconstruction)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2021-140303 A (TOYOTA MOTOR CORP.) 16 September 2021 (2021-09-16)<br>See paragraphs [0010]-[0015] and figure 1. | 1-15 |
| A | KR 10-2023-0057327 A (NAVER CLOUD CORP.) 28 April 2023 (2023-04-28)<br>See paragraph [0032], claim 1 and figure 1. | 1-15 |
| A | JP 2022-171732 A (BEIJING BAIDU NETCOM SCIENCE & TECHNOLOGY CO., LTD.) 11 November 2022 (2022-11-11)<br>See paragraphs [0017]-[0179] and figures 1-14. | 1-15 |
| A | US 2022-0230067 A1 (NTT COMMUNICATIONS CORPORATION) 21 July 2022 (2022-07-21)<br>See paragraphs [0021]-[0075] and figures 1-6. | 1-15 |
| A | US 2022-0379492 A1 (HITACHI, LTD.) 01 December 2022 (2022-12-01)<br>See paragraphs [0020]-[0070] and figures 1-9. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 September 2024** | **03 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/007175**

| Patent document cited in search report | | | Publication date (day/month/year) | Patent family member(s) | | | Publication date (day/month/year) |
|---|---|---|---|---|---|---|---|
| JP | 2021-140303 | A | 16 September 2021 | CN | 113420885 | A | 21 September 2021 |
| | | | | EP | 3876162 | A1 | 08 September 2021 |
| | | | | US | 2021-0279518 | A1 | 09 September 2021 |
| KR | 10-2023-0057327 | A | 28 April 2023 | JP | 2022-176136 | A | 25 November 2022 |
| | | | | JP | 7427047 | B2 | 02 February 2024 |
| | | | | KR | 10-2022-0153914 | A | 21 November 2022 |
| | | | | KR | 10-2525187 | B1 | 24 April 2023 |
| | | | | US | 11973672 | B2 | 30 April 2024 |
| | | | | US | 2022-0368614 | A1 | 17 November 2022 |
| JP | 2022-171732 | A | 11 November 2022 | AU | 2022-235559 | A1 | 06 October 2022 |
| | | | | CN | 114757225 | A | 15 July 2022 |
| | | | | CN | 114757225 | B | 30 May 2023 |
| | | | | JP | 7346685 | B2 | 19 September 2023 |
| | | | | US | 2023-0084865 | A1 | 16 March 2023 |
| US | 2022-0230067 | A1 | 21 July 2022 | CN | 114270372 | A | 01 April 2022 |
| | | | | JP | 2021-060762 | A | 15 April 2021 |
| | | | | JP | 7396847 | B2 | 12 December 2023 |
| | | | | WO | 2021-066194 | A1 | 08 April 2021 |
| US | 2022-0379492 | A1 | 01 December 2022 | JP | 2021-082049 | A | 27 May 2021 |
| | | | | JP | 7471072 | B2 | 19 April 2024 |
| | | | | WO | 2021-100267 | A1 | 27 May 2021 |

Form PCT/ISA/210 (patent family annex) (July 2022)